# EUROPÄISCHE PATENTSCHRIFT

(11) **EP 0 418 708 B1**
(45) Veröffentlichungstag und Bekanntmachung des Hinweises auf die Patenterteilung: **10.04.1996**
(21) Anmeldenummer: 90117504.2
(22) Anmeldetag: 11.09.1990
(51) Int. Cl.: G05D 3/00, G21C 17/003

(54) **Verfahren und Einrichtung zum ferngesteuerten Positionieren eines Prüfgerätes mit Hilfe einer dem Prüfgerät zugeordneten Fernsehkamera**
Method and apparatus for remote positioning of an inspection device with a video camera attached to the device
Procédé et dispositif de commande à distance d'un appareil d'inspection à l'aide d'une caméra de télévision fixée à l'appareil

(30) Priorität: 18.09.1989 DE 3931080
(43) Veröffentlichungstag der Anmeldung: 27.03.1991
(73) Patentinhaber: ABB Reaktor GmbH, D-68167 Mannheim (DE)
(72) Erfinder: Dietrich, Alban, D-6733 Hassloch (DE)
(74) Vertreter: Rupprecht, Klaus, Dipl.-Ing.

(56) Entgegenhaltungen:
- EP-A- 0 304 053
- US-A- 4 757 258

## Beschreibung

Die Erfindung betrifft ein Verfahren und eine Einrichtung zum ferngesteuerten Positionieren eines Prüfgerätes gegenüber einem Prüfobjekt mit Hilfe einer dem Prüfgerät zugeordneten Fernsehkamera durch Verfahrbewegungen von einem die Fernsehkamera und das Prüfgerät tragenden Schlitten.

Seither sind zur Positionierung des Prüfgerätes, wie z. B. eines Ultraschallprüfkopfes zur Inspektion von in einer Wasservorlage angeordneten Kernreaktorbauteilen, zwei Fernsehkameras von der Seite her auf den Prüfkopf gerichtet. Der Prüfkopf und die Fernsehkameras werden solange verfahren, bis das zu prüfende Objekt und der Prüfkopf in das Aufnahmefeld einer Kamera gelangt. Wegen des schrägen Blickwinkels der Kamera kann die gewünschte Prüfposition des Prüfgerätes zum Prüfobjekt nur ungenau bestimmt werden.

Aus der US-A-4 727 258 ist ein Verfahren zum Prüfen von Rohren bekannt, die mit ihren freien Enden aus einem Rohrboden vorstehen. Zum Positionieren einer in das Rohr einfahrbaren Prüfsonde ist der Einfahrvorrichtung eine Fernsehkamera zugeordnet, mit deren Hilfe die einfahrgerechte Position der Prüfsonde erzielt wird. Auch hier kann wegen des schrägen Blickwinkels der Kamera die exakte Einfahrposition nur unzulänglich bestimmt werden.

Es stellt sich die Aufgabe, ein Verfahren der eingangsgenannten Art anzugeben, das eine präzise und zeitsparende Positionierung sicherstellt.

Gelöst wird diese Aufgabe erfindungsgemäß dadurch, daß die Fernsehkamera und das Prüfgerät in einem vorgebbaren Abstandsmaß parallel zueinander und auf einer Symmetrieachse übereinander angeordnet werden, daß eine der Fernsehkamera eigene Markierung auf eine Markierung des Prüfobjektes ausgerichtet wird und daß zur Positionierung des Prüfgerätes der Schlitten um das Abstandsmaß verfahren wird.

Unter Beobachtung eines mit der Kamera verbundenen Monitors wird eine Markierung der Kamera auf das Objekt zentriert. Nach dem Erreichen der Zentrierung ist die Kamera dann senkrecht auf das Objekt gerichtet, so daß dieser Vorgang präzise durchgeführt werden kann. Durch Verfahren des gemeinsamen Trägers entlang der Symmetrieachse um das Abstandsmaß erfolgt eine präzise Positionierung des Prüfgerätes relativ zum Objekt. Bei diesem Vorgang ist eine Kamerabeobachtung nicht mehr erforderlich. Die zuverlässige Prüfung des Objekts setzt eine präzise Positionierung des Prüfgerätes voraus.

Eine Einrichtung zur Durchführung des Verfahrens zeichnet sich dadurch aus, daß an dem Schlitten ein Träger befestigt ist, der an Konturen der Fernsehkamera und des Prüfgerätes angepaßte Aussparungen aufweist, daß zwischen der Fernsehkamera und dem Prüfgerät ein dieselben übergreifendes Klemmstück vorgesehen ist, daß die der Fernsehkamera eigene Markierung der Kontur des Prüfobjektes angepaßt ist, und daß der Schlitten entlang eines Führungsteils verfahrbar ist, das über eine Schraubverbindung an einem mit einem Querschlitten verbundenen Gestell befestigt ist.

Damit wird eine stabile Halterung des Prüfgerätes erreicht und eine präzise Kameraansteuerung erleichtert.

Gemäß einer bevorzugten Ausgestaltung ist das Prüfgerät in einer axialen Richtung relativ zur Fernsehkamera bewegbar.

Damit wird bei einem gemeinsamen Träger gewährleistet, daß die Kamera den zur Erzielung einer guten Bildqualität erforderlichen Abstand einhalten kann und das Prüfgerät seine Prüfaufgaben durch sein Heranfahren an das Prüfobjekt erfüllen kann.

Um auf einfache Weise eine Umlenkung und Bündelung der Lichtstrahlen zu erzielen wird vorgesehen, daß dem stationären Führungsteil des Prüfgeräteschlittens eine bis unterhalb des Trägers erstreckte Konsole zugeordnet ist, die einen gegenüber einer Lichtquelle angeordneten Spiegel aufweist.

Anhand eines Ausführungsbeispiels wird das erfindungsgemäße Verfahren und eine nach dem Verfahren arbeitende Einrichtung beschrieben.

Dabei zeigt die
- Fig. 1: eine Kernumfassung einer wasserkühlten Kernreaktoranlage mit einem Prüfgerät,
- Fig. 2: einen Teilbereich der Einrichtung in einem größeren Maßstab,
- Fig. 3: eine Ansicht in Pfeilrichtung III der Fig. 2 und
- Fig. 4a, 4b: einen Monitorausschnitt aus einer Kameraeinstellung.

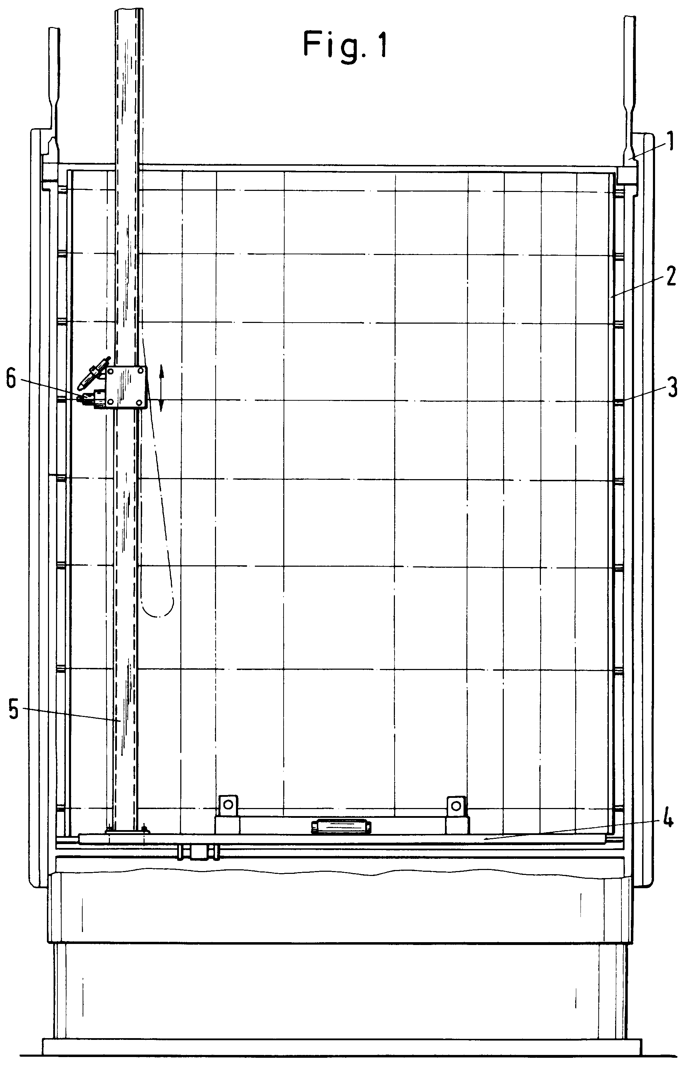

Die Fig. 1 zeigt in einem Längsschnitt einen Teilbereich eines Kerngerüstes 1 einer wassergekühlten Kernreaktoranlage. Das Kerngerüst nimmt eine Kernumfassung 2 auf, deren Peripherie einem nicht dargestellten Brennelementverband angepaßt ist. Sie weist daher in ihrem Querschnitt betrachtet eine Vielzahl von Abknickungen auf.

Im Bereich jeder Abknickung ist die Kernumfassung mit Schrauben 3 am Kerngerüst 1 befestigt. Zur Inspektion des Prüfobjektes Schrauben ist eine Stützplatte 4 am Boden des Kerngerüstes angeordnet, auf der ein Mast 5 abgestützt ist. Am Mast 5 befestigte Zentrierbolzen 5a greifen dabei in entsprechende Aussparungen der Stützplatte 4 ein. An seinem oberen, nicht dargestellten Ende kann der Mast von einem Hebezeug gehalten werden. Entlang des Mastes ist ein Prüfgerät 6 zur Inspektion der Schrauben 3 verfahrbar.

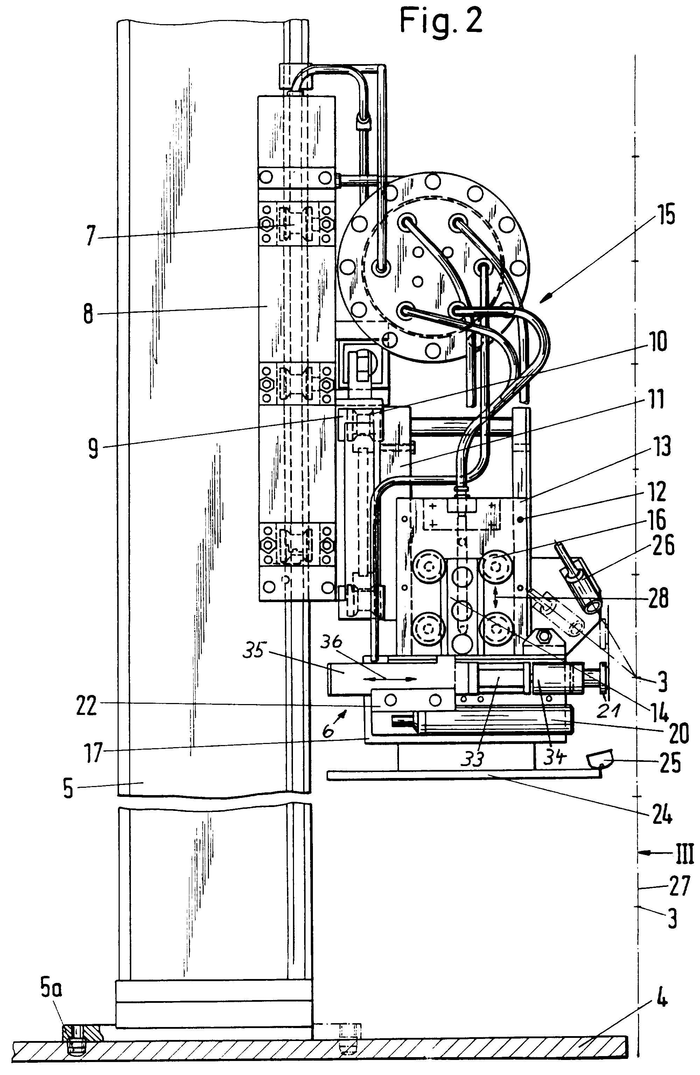

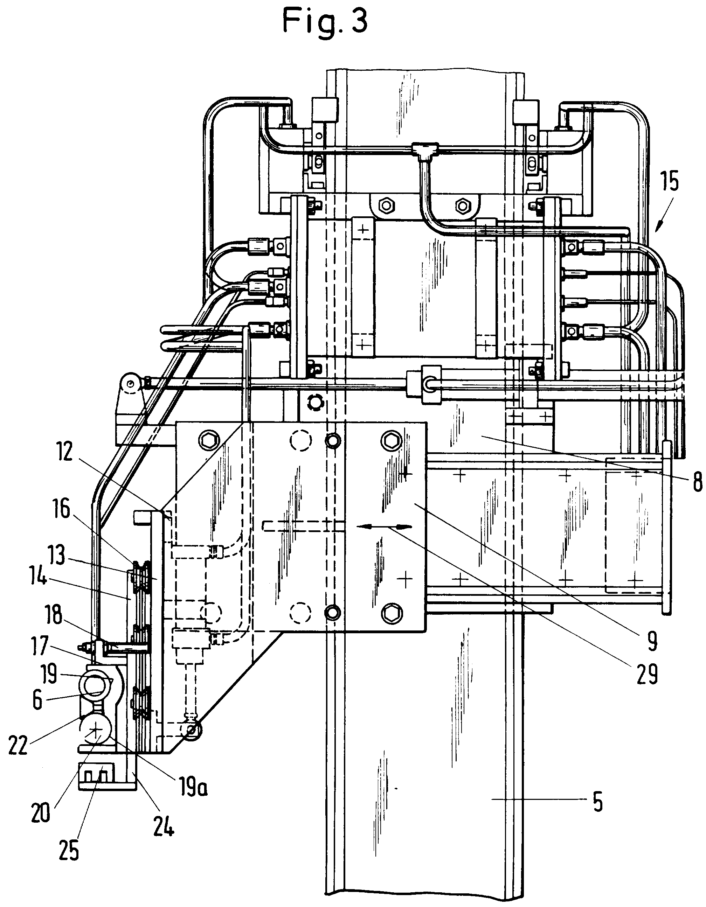

Die Figuren 2 und 3 zeigen in einem größeren Maßstab einem dem Mast 5 zugeordneten und in dessen Achsrichtung über Rollen 7 bewegbaren Längsschlitten 8, der einen über Rollen 10 verschiebbaren Querschlitten 9 trägt. An einem mit dem Querschlitten 9 verbundenen Gestellt 11 ist über eine Schraubverbindung 12 ein Führungsteil 13 eines senkrecht zum Querschlitten 9 verfahrbaren Prüfgeräteschlittens 14 befestigt. Die Bewegungssteuerung der Schlitten 8, 9, 14 erfolgt über Steuerleitungen 15. Das Führungsteil 13 trägt ferner die Rollen 16, entlang derer der Prüfgeräteschlitten 14 bewegbar ist. Ein Träger 17 ist über einen Stehbolzen 18 mit dem Führungsteil 13 starr verbunden. Der Träger 17 ist mit Aussparungen 19, 19a versehen, die der Kontur der darin auf zunehmenden Bauteile Fernsehkamera 20 und Prüfgerät 6 angepaßt ist. Ein Klemmstück 22, das mit dem Träger 17 verschraubt ist, hält die Fernsehkamera und das Prüfgerät, das im Ausführungsbeispiel ein Ultraschallprüfkopf 21 ist, in ihrer starren Position zueinander. Wie aus der Figur 2 ersichtlich, sind die Fernsehkamera und das Prüfgerät unter Wahrung eines Mittenabstandes von 50mm parallel zueinander angeordnet. Die Figur 3 zeigt, daß Fernsehkamer und Prüfgerät auch senkrecht übereinander auf einer gemeinsamen Symmetrieachse angeordnet sind. Diese Symmetrieachse verläuft parallel zur Bewegungsrichtung des Prüfgeräteschlittens 14. Mit dem Führungsteil 13 ist noch eine unterhalb der Fernsehkamera 20 angeordnete Konsole 24 verbunden, die an ihrem dem Objektiv der Fernsehkamera zugewandten Ende einen Spiegel 25 trägt. Er dient zur Bündelung der von dem am Führungsteil 13 befestigten Lichtquellen 26 ausgehenden Lichtstrahlen.

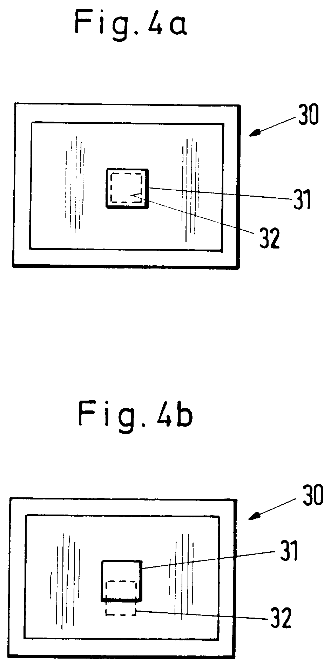

Eine strichpunktierte Linie 27 deutet einen Wandteil der Kernumfassung 2 an und am Ende des Strahlenbündels der Lichtquellen 26 ist eine Befestigungsschraube 3 angedeutet. Soll das Prüfgerät 6 in die in Figur 2 dargestellte Prüfposition gebracht werden, so ist der Prüfgeräteschlitten 14 in Pfeilrichtung 28 und der Querschlitten 9 in Pfeilrichtung 29 solange zu bewegen, bis daß im Monitor 30 nach Figur 4a eine Deckung der quadratischen, in der Fernsehkamera integrierten Markierung 31 mit dem Vierkantkopf 32 der Befestigungsschraube 3 eingetreten ist. Dabei entspricht die Kontur der Markierung 31 der Kontur des Vierkantkopfes. In der Figur 4b ist zur Verdeutlichung die Markierung 31 und der Vierkantkopf 32 der Befestigungsschraube 3 in der Phase vor Erreichen der Deckungsgleichheit dargestellt. Sobald die Konturendeckung eingetreten ist, d.h. die Achse der Kamera bildet eine gedachte Verlängerung der Achse der Befestigungsschraube 3, ist die Aufgabe der Kamera 20 erfüllt. Die Positionierung des Prüfgerätes 6 erfolgt nun durch einfaches Verfahren des Prüfgeräteschlittens 14 in Pfeilrichtung 28 (Figur 2) um das Abstandsmaß zwischen den Achsen von Fernsehkamera 20 und Prüfgerät 6, das im Ausführungsbeispiel mit 50mm angegeben ist.

Über eine Führungsstange 33 ist der dem Prüfobjekt zugewandte Ultraschallprüfkopf 21 zusammen mit einem eine Drehung des Ultraschallprüfkopfes um seine Achse bewirkenden Drehantriebes 34 relativ zu dem mit dem Klemmstück 22 stationär gehaltenen Trägerteil 35 des Prüfgerätes 6 in Pfeilrichtung 36 bewegbar.

## Patentansprüche

1. Verfahren zum ferngesteuerten Positionieren eines Prüfgerätes (6) gegenüber einem Prüfobjekt (3) mit Hilfe einer dem Prüfgerät zugeordneten Fernsehkamera (20) durch Verfahrbewegungen von einem die Fernsehkamera und das Prüfgerät tragenden Schlitten (14), dadurch gekennzeichnet, daß die Fernsehkamera (20) und das Prüfgerät (6) in einem vorgebbaren Abstandsmaß parallel zueinander und auf einer Symmetrieachse übereinander angeordnet werden, daß eine der Fernsehkamera (20) eigene Markierung (31) auf eine Markierung (32) des Prüfobjektes (3) ausgerichtet wird und daß zur Positionierung des Prüfgerätes (6) der Schlitten (14) um das Abstandsmaß verfahren wird.

2. Einrichtung zum ferngesteuerten Positionieren eines Prüfgerätes (6) gegenüber einem Prüfobjekt (3) mit Hilfe einer dem Prüfgerät zugeordneten Fernsehkamera (20) durch Verfahrbewegungen von einem die Fernsehkamera und das Prüfobjekt tragenden Schlitten (14), zur Durchführung des Verfahrens nach Anspruch 1, dadurch gekennzeichnet, daß an dem Schlitten (14) ein Träger (17) befestigt ist, der den Konturen der Fernsehkamera (20) und des Prüfgerätes (6) angepaßte Aussparungen (19, 19a) aufweist, daß zwischen der Fernsehkamera (20) und dem Prüfgerät (6) ein dieselben übergreifendes Klemmstück (22) vorgesehen ist, daß die der Fernsehkamera (20) eigene Markierung (31) der Kontur des Prüfobjektes (3) angepaßt ist und daß der Schlitten (14) entlang eines Führungsteils (13) verfahrbar ist, das über eine Schraubverbindung (12) an einem mit einem Querschlitten (9) verbundenen Gestell (11) befestigt ist.

3. Einrichtung nach Anspruch 2, dadurch gekennzeichnet, daß das Prüfgerät (6) in einer axialen Richtung relativ zur Fernsehkamera (20) bewegbar ist.

4. Einrichtung nach einem der Ansprüche 2 oder 3, dadurch gekennzeichnet, daß dem stationären Führungsteil (13) des Schlittens (14) eine bis unterhalb des Trägers (17) erstreckte Konsole (24) zugeordnet ist, die einen gegenüber der Lichtquelle (26) angeordneten Spiegel (25) aufweist.

## Claims

1. Process for the remote-controlled positioning of an inspection device (6) relative to an object under inspection (3) with the aid of a television camera (20), assigned to the inspection device, by travelling movements of a carriage (14) carrying the television camera and the inspection device, characterized in that the television camera (20) and the inspection device (6) are arranged parallel to each other at a predeterminable specified distance and one above the other on an axis of symmetry, in that an own marking (31) for the television camera (20) is aligned with a marking (32) of the object under inspection (3) and in that the carriage (14) is displaced by the specified distance in order to position the inspection device (6).

2. Apparatus for the remote-controlled positioning of an inspection device (6) relative to an object under inspection (3) with the aid of a television camera (20), assigned to the inspection device, by travelling movements of a carriage (14) carrying the television camera and the inspection device, for carrying out the process according to Claim 1, characterized in that a carrier (17) which has clearances (19, 19a) adapted to the contours of the television camera (20) and of the inspection device (6) is fastened on the carriage (14), in that between the television camera (20) and the inspection device (6) there is provided a clamping piece (22) spanning the said camera and device, in that the own marking (31) for the television camera (20) is adapted to the contour of the object under inspection (3) and in that the carriage (14) can be displaced along a guidance part (13) which is fastened by means of a screw connection (12) to a frame (11) connected to a transverse carriage (9).

3. Apparatus according to Claim 2, characterized in that the inspection device (6) can be moved in an axial direction relative to the television camera (20).

4. Apparatus according to one of Claims 2 or 3, characterized in that the stationary guidance part (13) of the carriage (14) is assigned a console (24), which extends underneath the carrier (17) and has a mirror (25) arranged opposite the light source (26).

## Revendications

1. Procédé pour le positionnement à distance d'un appareil d'inspection (6) vis-à-vis d'un objet (3) à contrôler à l'aide d'une caméra de télévision (20) associée audit appareil d'inspection, opérant par déplacement d'un chariot (14) portant la caméra de télévision et l'appareil d'inspection, caractérisé par le fait que l'on dispose la caméra de télévision (20) et l'appareil d'inspection (6) parallèlement l'un à l'autre, à une distance prédéterminée, et l'un au-dessus de l'autre sur un axe de symétrie, par le fait que l'on aligne un repère (31) intégré à la caméra de télévision (20) sur un repère (32) de l'objet (3) à contrôler et par le fait que pour positionner l'appareil d'inspection (6) on déplace le chariot (14) de la valeur de la distance prédéterminée.

2. Dispositif pour le positionnement à distance d'un appareil d'inspection (6) vis-à-vis d'un objet (3) à contrôler à l'aide d'une caméra de télévision (20) associée audit appareil d'inspection, opérant par déplacement d'un chariot (14) portant la caméra de télévision et l'appareil d'inspection, pour la mise en oeuvre du procédé selon la revendication 1, caractérisé par le fait qu'un support (17) pourvu d'évidements (19, 19a) adaptés aux contours de la caméra de télévision (20) et de l'appareil d'inspection (6) est fixé sur le chariot (14), par le fait qu'il est prévu entre la caméra de télévision (20) et de l'appareil d'inspection (6) un élément de serrage (22) unique qui agit sur les deux éléments, par le fait que le repère (31) intégré à la caméra de télévision (20) est adapté au contour de l'objet (3) à contrôler et par le fait que le chariot (14) peut être déplacé le long d'un élément de guidage (13) qui est fixé par des vis (12) sur un cadre (11) lié à un chariot transversal (9).

3. Dispositif selon la revendication 2, caractérisé par le fait que l'appareil d'inspection (6) peut être déplacé dans une direction axiale par rapport à la caméra de télévision (20).

4. Dispositif selon l'une des revendications 2 ou 3, caractérisé par le fait qu'une console (24) qui s'étend jusqu'en dessous du support (17) et porte un miroir (25) placé en vis-à-vis de la source lumineuse (26) est associée à l'élément de guidage (13) stationnaire du chariot (14).
